# EUROPEAN PATENT APPLICATION

(11) **EP 4 738 649 A1**
(43) Date of publication of application: **06.05.2026**
(21) Application number: 25211359.2
(22) Date of filing: 27.10.2025
(51) Int. Cl.: H02J 50/12

(54) **A WIRELESS CHARGER AND RECEIVING LOAD OF BACKWARD COMPATIBILITY THAT AUTOMATICALLY IDENTIFIES FAST AND SLOW CHARGING**

(30) Priority: 30.10.2024 CN 202411525832
(71) Applicant: PI POWER PRODUCT (SHENZHEN) COMPANY LIMITED, Shenzhen, Guangdong 518173 (CN)
(72) Inventor: Xiang, Guanghui, Changsha City 410000 (CN)
(74) Representative: Diaz Nunez, Joaquin

(57) **Abstract**

The present invention discloses a backward-compatible wireless charger that automatically identifies fast and slow charging receiving load, comprising a wireless charger and a receiving load, the wireless charger comprises two-level variable DC voltage regulator circuit, a main resonance circuit, a resonant current sampling voltage divider and comparison circuit, the receiving load comprises a receiving resonant circuit, and the resonant frequency of the receiving load is compared with the resonant frequency of resonant circuit in the wireless charger to distinguish different receiving loads and to charge correspondingly. Only common circuit components are used and the circuit is simple, of small size, at low cost, with low energy consumption, safe, effective and reliable, to achieve the high cost-performance of the whole circuit, and at the same time it realizes the compatible fast charging and slow charging receiving load.

## Description

### Technical field

The present invention relates to the technical field of wireless charging circuit, in particular to a wireless charger that is backward-compatible with automatic identification of fast and slow charging according to receive load.

### Background technology

With the increasing improvement of people's living standards and the increasing importance of oral health, wireless power receiving loads (such as electric toothbrushes) have begun to widely enter into thousands of households with their efficient cleaning functions, which use rechargeable batteries to drive DC motors to achieve different speeds and directions and vibration functions to drive the toothbrush head to achieve efficient cleaning of teeth without dead corners. Considering its use of environmental conditions, it must achieve a certain need for waterproof and dustproof, and its supporting mainstream charging method is electromagnetic coupling wireless charging, and the wireless charger has no physical contact with the receiving circuit of the wireless power receiving load (such as: electric toothbrush). According to the needs of users' fast-paced life and the need for portable travel, the requirements for faster and more convenient wireless charging speed are proposed. The fast-charging wireless charger is required to not only achieve fast charging to receiving load, but also be backward-compatible and protect the slow-speed compatible charging of the previous generation of receiving loads. It avoids potential safety hazards, protects the rights and interests of users, and also meets the fast and slow charging needs of different users.

### Contents of the invention

The object of the present invention is to solve the technical problem of the compatible charging of the wireless charger to the fast-charging receiving load and the slow-charging receiving load.

The present invention provides a backward-compatible wireless charger and a receiving load that automatically identifies fast and slow charging, comprises a wireless charger and a receiving load, the wireless charger comprises two-level variable DC voltage regulator circuit, a main resonance circuit, a resonant current sampling voltage divider and comparison circuit, the receiving load comprises a receiving load resonance circuit. and the two-level variable DC regulator circuit is used for converting the AC input voltage of the power grid into a low-voltage or high-voltage two-level variable stable DC output voltage, the resonant current sampling voltage divider and comparison circuit is used for controlling the output voltage level of the two-level variable DC voltage regulator circuit, and the main resonant circuit adopts a sine wave resonant circuit to convert the DC energy into high-frequency alternating current energy and emits the magnetic field energy through the transmitting coil; the receiving resonant circuit receives the magnetic field energy, charges the rechargeable battery after passing through the rectifier filter circuit of the post-stage and the CC/CV charging control circuit, compares the resonant frequency point of LC in the receiving load with the resonant frequency point of the main resonant circuit in the wireless charger, distinguishes different receiving loads and realizes charging mode.

Preferably, in a no-load application, the resonant current of the main resonant circuit is very low, and the output voltage of the two-level variable DC voltage regulator circuit is automatically controlled as a low voltage level after being processed by the resonant current sampling voltage divider and the comparison circuit; The resonant energy intensity of the main resonant circuit is very weak, and the whole wireless charger circuit works in low-power power-saving standby mode.

Preferably, when applied to the slow-charging receiving load, the main resonant circuit at the wireless charger is proportionally coupled with the resonant circuit of the slow-charging receiving load for ordinary transformers style, the resonant current of the main resonant circuit is lower than the setting threshold value, and the output voltage of the two-level variable DC voltage regulator circuit is automatically controlled into a low voltage level after being processed by the resonant current sampling voltage divider and comparison circuit, so that the low-power compatible charging mode of the slow-charging receiving load is realized.

Preferably, when applied to the fast-charging receiving load, the main resonant circuit at the wireless charger carries out strong resonance and strong coupling with the resonant circuit of the fast-charging receiving load, the resonant current of the main resonant circuit exceeds the setting threshold value, and the output voltage of the two-level variable DC regulator circuit is automatically controlled into a high-voltage level after being processed by the resonant current sampling voltage divider and comparison circuit, so that the stable normal high-power fast-charging mode of the fast-charging receiving load is realized.

Preferably, the two-level variable DC voltage regulator circuit comprises an overcurrent protection component RF5001, a front rectifier device (or component) DB5001 (full-bridge rectification or half-wave rectification), a main switching device Q5001 (MOSFET or BJT or other switching device), a rear rectifier diode D1, a main filter capacitor C5001, a feedforward voltage sampling upper voltage divider resistor R1, a feedforward voltage sampling lower side voltage divider resistor R2, a reference voltage regulator component Z1, a voltage regulator driving switch Q5002 and a main switching device driving bias resistor R3. and the input of the two-level variable DC voltage regulator circuit is connected to the live L and the neutral line N terminal of the single-phase AC mains power supply respectively, the live L (or the neutral line N) is connected to one terminal of the overcurrent protection component RF5001, and the another terminal of the overcurrent protection component RF5001 is connected to one terminal of the AC input of the former rectifier device (or component) DB5001, the neutral wire N (or the live L) is connected to the another terminal of the AC input of the former rectifier device (or component) DB5001; the DC output positive terminal of described front rectifier device (or component) DB5001 is connected to the current input terminal of described main switching device Q5001, and is connected to one terminal of voltage divider resistor R1 at the upper terminal of described feedforward voltage sampling and one terminal of driving bias resistor R3 of described main switching device simultaneously; the DC output negative terminal network of the former rectifier device (or component) DB5001 is named the reference ground AGND; The current output terminal of described main switching device Q5001 is connected to the anode of described rear rectifier diode D1; the cathode of described rear rectifier diode D1 is connected to the positive terminal of described main filter capacitor C5001; the negative terminal of the main filter capacitor C5001 is connected to the reference ground AGND; the another terminal of the feedforward voltage sampling upper side voltage divider resistor R1 is connected to one terminal of the feedforward voltage sampling lower side voltage divider R2 and the cathode of the reference voltage regulator component Z1 and the current inflow terminal of the shunt resistor R5 of the resonant current sampling voltage divider and comparison circuit; the another terminal of the feedforward voltage sampling lower side voltage divider resistor R2 is connected to the reference ground AGND; The anode of described reference voltage regulator component Z1 is connected to the control terminal of described voltage regulator driving switch Q5002; The current inflow terminal of described voltage regulator driving switch Q5002 is connected to the another terminal of described main switching device driving bias resistor R3 and the control terminal of described main switching device Q5001; The current outflow terminal of described voltage regulator driving switch Q5002 is connected to described reference ground AGND.

Preferably, the main resonant circuit comprises a main resonant inductor T5001-A, a main resonant capacitor C11, a main resonant switch Q5003, an anti-reverse current diode D2, a positive feedback voltage dividing capacitor C5002, a resonant current sampling resistor R10, an upper bias resistor R7 of the main resonant switch and a lower bias resistor R8 of the main resonant switch; one terminal of the main resonant inductor T5001-A is connected to one terminal of the positive terminal of the main filter capacitor C5001 and the positive feedback voltage dividing capacitor C5002 and one terminal of the upper bias resistor R7 of the main resonant switch and one terminal of the current bias resistor R6 of the resonant current sampling divider and comparison circuit; the another terminal of the main resonant inductor T5001-A is connected to the current inflow terminal of the main resonant switch Q5003 and one terminal of the main resonant capacitor C11; The current outflow terminal of described main resonant switch Q5003 is connected to the anode of described anti-reverse current diode D2; the cathode of the anti-reverse current diode D2 is connected to the another terminal of the main resonant capacitor C11 and the another terminal of the positive feedback voltage divider C5002 and one terminal of the resonant current sampling resistor R10 and the one terminal of the current sampling upper terminal of the resonant current sampling voltage divider and the comparison circuit; The control terminal of described main resonant switch Q5003 is connected to the another terminal of upper bias resistor R7 of described main resonant switch and one terminal of lower bias resistor R8 of described main resonant switch; The another terminal of lower bias resistor R8 of described main resonant switch is connected to described reference ground AGND; The another terminal of described resonant current sampling resistor R10 is also connected to described reference ground AGND; There is a magnetic field coupling relationship between the main resonant inductor T5001-A of wireless charger and resonant inductance Lr_s of the receiving load.

Preferably, the resonant current sampling voltage divider and comparison circuit comprises a current sampling upper voltage divider resistor R12, a current sampling lower side voltage divider resistor R11, a current sampling lower side filter capacitor C2, a voltage comparing control device U1, a voltage regulator component Z3, a current bias resistor R6, and a shunt resistor R5; One terminal of described current sampling upper side voltage divider resistor R12 is connected with the cathode network of described anti-reverse current diode D2; the another terminal of described current sampling upper side voltage divider resistor R12 is connected to one terminal of described current sampling lower side voltage divider resistor R11 and one terminal of described current sampling lower side filter capacitor C2 and described reference voltage input terminal of voltage comparing control device U1; the another terminal of the voltage divider resistor R11 at the lower terminal of the current sampling and the another terminal of the filter capacitor C2 at the lower terminal of the current sampling and the ground level common terminal of the voltage comparing control device U1 are all connected to the reference ground AGND together; One terminal of described current bias resistor R6 is connected with the positive terminal network of described main filter capacitor C5001; the another terminal of described current bias resistor R6 is connected to the current inflow terminal of described voltage comparing control device U1 and the cathode of described voltage regulator component Z3 and the current outflow terminal of described shunt resistor R5; The anode of the voltage regulator component Z3 is connected to the reference ground AGND.

Preferably, the receiving resonant circuit comprises a resonant inductance Lr_s, a resonant capacitance Cr_s, a rectifier diode D_s, a filter capacitor Cf_s, a charging control switch Qsw_s, a charging current sampling resistor Rcs_s, a rechargeable battery Vbatt, and a CC/CV charging control circuit function block; there is a magnetic field coupling relationship between the resonant inductor Lr_s and the main resonant inductor T5001-A at the transmitting terminal of the wireless charger; the resonant inductor Lr_s and the resonant capacitor are parallel connection relationship (or series connection relationship); one terminal of the resonant inductance Lr_s and the resonant capacitance Cr_s connects to the anode of the rectifier diode D_s; the another terminal of the resonant inductance Lr_s and the resonant capacitance Cr_s is named as the reference ground; the cathode of the rectifier diode D_s is connected to one terminal of the filter capacitor Cf_s and the current inflow terminal of the charge control switch Qsw_s and the voltage sampling terminal of the CC/CV charge control circuit function block; The another terminal of the filter capacitor Cf_s and the ground level common terminal of the CC/CV charging control circuit function block are connected to the reference ground together; The current outflow terminal of the charging control switch Qsw_s is connected to one terminal of the charging current sampling resistor Rcs_s and the current sampling positive terminal of the CC/CV charging control circuit function block; the another terminal of the charging current sampling resistor Rcs_s is connected to the positive terminal of the rechargeable battery Vbatt and the negative terminal of the current sampling of the CC/CV charging control circuit function block; The negative terminal of the rechargeable battery Vbatt at is connected to the reference ground.

The present invention has the following beneficial effects over the prior art:
The invention discloses a wireless charger that is backward-compatible with automatic identification of fast and slow charging receiving load, comprises a wireless charger and a receiving load. The wireless charger comprises two-level variable DC voltage regulator circuit, a main resonant circuit, a resonant current sampling voltage divider and comparison circuit, the receiving load comprises a receiving resonant circuit. and the two-level variable DC voltage regulator circuit are used for converting the AC input voltage of the power grid into two level variable stable DC output voltages of low voltage or high voltage, the resonant current sampling voltage divider and comparison circuit is used for controlling the output voltage level of the two-level variable DC voltage regulator circuit, and the main resonant circuit adopts a sine wave resonant circuit to convert the DC energy into high-frequency alternating current energy and emits the magnetic field energy through transmitting coil; described receiving resonant circuit receives described magnetic field energy, after passing the rectifier filter circuit of the latter stage and the CC/CV charging control circuit, the rechargeable battery is charged, according to the resonance frequency relationship between the receiving load and described wireless charger, different receiving loads are distinguished and charging is realized. the inherent low frequency fluctuation phenomenon of alternating current power grid is utilized to carry out clipping and voltage regulation, and the switching frequency of main switch device is only 100/120Hz, The losses of the entire regulator circuit are very low; Moreover, there is no need for particularly high-priced control integrated chips and peripheral circuits, only commonly used circuit components are used, the circuit is simple, the size is small, the cost is low, safe, effective and reliable; At the same time, it avoids the EMI (electromagnetic interference) problem derived from high-frequency switching and the need for complex noise suppression countermeasures, realizes the high cost performance of the whole circuit and improves the competitiveness of the product. At the same time, a difference in the resonant current is caused by the difference in the resonant frequency of the fast charging receiving load and slow charging receiving load. This difference in resonant current is used to automatically adjust the power supply voltage of the main resonant circuit. Thus, the compatible charging of the receiving load of fast charging and slow charging is realized.

### Description of the drawings

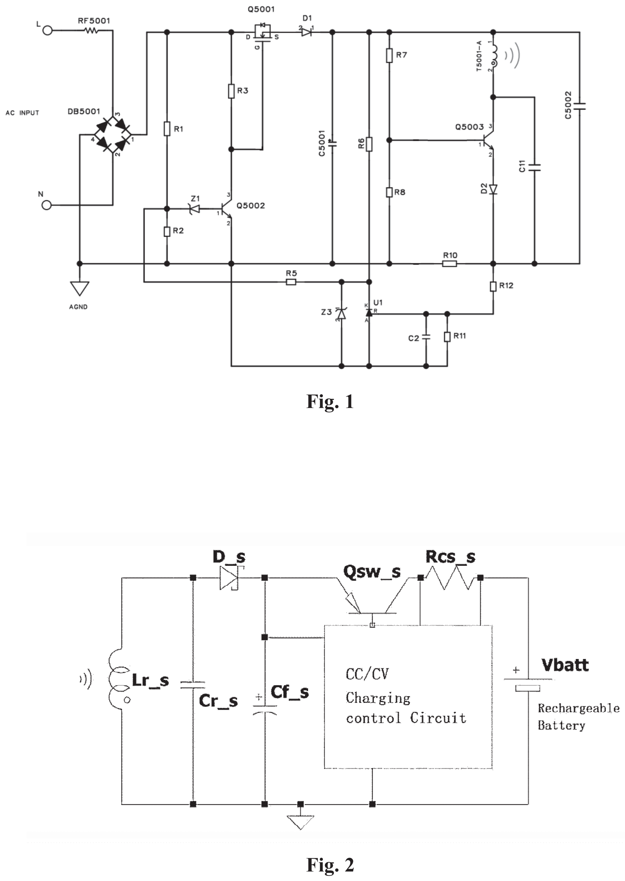

Fig. 1 is a circuit block diagram of the wireless charger of the present invention that is backward-compatible with a wireless charger that automatically identifies fast and slow charging receiving load.
Fig. 2 is a circuit block diagram of the receiving load of a wireless charger that is backward-compatible with automatic identification of fast and slow charging receiving load.

### The specific embodiment

The present invention is further illustrated below in conjunction with the accompanying drawings and specific embodiments.

Referring to accompanying drawings 1 to accompanying drawings 2, a wireless charger that is backward-compatible with automatic identification of fast and slow charging receiving load, comprises a wireless charger and a receiving load, the wireless charger comprises two-level variable DC voltage regulator circuit, a main resonant circuit, a resonant current sampling voltage divider and comparison circuit, the receiving load comprises a receiving load resonance circuit, and the two-level variable DC voltage regulator circuit are used for converting the AC input voltage of the power grid into two level variable stable DC output voltages of low voltage or high voltage, the resonant current sampling voltage divider and comparison circuit is used for controlling the output voltage level of the two-level variable DC voltage regulator circuit, and the main resonant circuit adopts a sine wave resonant circuit to convert the DC energy into high-frequency alternating current energy and emits the magnetic field energy through the transmitting coil; the receiving resonant circuit receives the magnetic field energy, charges the rechargeable battery after passing the rectifier filter circuit of the post-stage and the CC/CV charging control circuit, compares the resonant frequency of the receiving load with the resonant frequency of the main resonant circuit in the wireless charger, distinguishes among different receiving loads and realizes charging; Described two-level variable DC voltage regulator circuit comprises fusible resistor RF5001, front full-bridge rectifier DB5001, main switching MOSFET Q5001, rear rectifier diode D1, main filter capacitor C5001, feedforward voltage sampling upper side voltage divider resistor R1, feedforward voltage sampling lower side voltage divider resistor R2, zener diode Z1, switching control transistor Q5002 and main switching device driving bias resistor R3; Described main resonant circuit comprises main resonant inductor T5001-A, main resonant capacitor C11, main resonant switch Q5003, anti-reverse current diode D2, positive feedback voltage dividing capacitor C5002, resonant current sampling resistor R10, main resonant switch upper bias resistor R7 and main resonant switch lower bias resistor R8; Described resonant current sampling voltage divider and comparison circuit comprises current sampling upper side voltage divider resistor R12, current sampling lower side voltage divider resistor R11, current sampling lower side filter capacitor C2, precision shunt regulator U1, zener diode Z3, current bias resistor R6, shunt resistor R5; The receiving load comprises a resonant inductance Lr_s, a resonant capacitor Cr_s, a rectifier diode D_s, a filter capacitor Cf_s, a charging control switch Qsw_s, a charging current sampling resistor Rcs_s, a rechargeable battery Vbatt, and a CC/CV charging control circuit function block.

The working principle of the embodiment circuit of the wireless charger and the receiving load is as follows: after the wireless charger applies the input voltage of the power grid 100-240V, the AC input voltage is rectified through the DB5001 rectifier bridge, and a DC pulsating sinusoidal voltage waveform of 100Hz/120Hz is formed at the positive and negative output terminals of the rectifier bridge DB5001, and R1, R2, Z1, Q5002 form a feedforward voltage sampling and reference comparison circuit for the pulsating sinusoidal voltage, When the amplitude of the DC pulsating sinusoidal voltage is less than low output voltage level (for example 60V), Z1 and Q5002 cannot be turned on, and the main switching MOSFET Q5001 and anti-reverse current diode D1 can be turned on to charge the filter capacitor C5001 and supply power to the main resonant circuit at the same time.

When the amplitude of the pulsating sinusoidal voltage is greater than the mentioned low output voltage level, Z1 and Q5002 can be turned on, the gate drive of the main switching MOSFET Q5001 is pulled low, and the main switching MOSFET Q5001 is OFF and block the charging path to the filter capacitor C5001, during this time the stored energy of the C5001 supplies power to the main resonant circuit. In the steady state, the C5001 is continuously charged and discharged at twice the AC input frequency of 50/60Hz, and the voltage at both C5001 terminals is balanced at about the low voltage level. The main resonant circuit of the rear stage is supplied by this low output level so that the main resonant circuit is in low-power resonance mode, and the entire wireless charger circuit works in power-saving standby mode with less than 0.1W input power, and the wireless charger will always maintain this standby mode when there is no load. Because this circuit takes advantage of the inherent double frequency fluctuation phenomenon of AC power grid, the switching frequency of the main switching MOSFET Q5001 is only 100/120Hz, so the switching loss of the entire voltage regulator circuit is very low. And there is no need for particularly expensive control integrated chips and complex peripheral circuits. In addition, it avoids the radiated EMI (electromagnetic interference) problem caused by high-frequency switching and the need for complex anti-interference filter components, and realizes a high performance-to-price ratio for the entire circuit.

When the wireless charger is in standby mode, if the slow-charging receiving load is placed in its output coupling position, because the inherent resonant frequency of the internal resonant circuit of the slow-charging receiving load is much higher than the transmitting frequency of the wireless charger, the combination of resonant devices at the slow-charging receiving load cannot well resonate with the wireless charger side and then only draws small coupling energy from wireless charger. At this moment, the power supply current of the main resonant circuit in wireless charger is sampled by R10 and filtered by R12,R11 voltage division and C2, and the sampling voltage is sent to the reference voltage input terminal of precision shunt regulator U1, because the resonance intensity is weak at this time, The sampling input voltage is lower than the setting threshold voltage (for example 2.495V) of U1, so the output terminal of U1 maintains a high impedance to the reference ground, and its paralleled zener diode Z3 is powered by the above-mentioned low level output voltage through the pull-up resistor R6, so that the voltage clamp at both terminals of Z3 is clamped at its voltage regulation value of 12V, and the voltage at the left and right terminals of the shunt resistors R5 is almost equal, and almost no current flows through R5, therefore, R5 is equivalent to the open circuit mode at this time, that is, R5 does not participate in the sampling and voltage dividing work of the two level variable output voltage circuit, and the two-level variable output voltage circuit maintains its low level output voltage. In this mode, the slow-charging receiving load can only receive the relatively weak magnetic field energy through the proportional coupling principle of the ordinary transformer winding, and convert it into weak electrical energy, which realizes the protection of the corresponding power components of its internal circuit from the hazards of overvoltage, overcurrent and overpower stress, and realizes the compatible slow charging function of the battery.

When the wireless charger is in standby mode, if the fast-charging receiving load is placed in its output coupling position, because the inherent resonant frequency of the resonant circuit inside the fast-charging receiving load is set to be close to the transmitting frequency of the wireless charger, the combination of resonant devices at the fast-charging receiving load generates a strong resonance phenomenon, and the load can be coupled to stronger energy to charge the battery. At this moment, after the related larger power supply current generated by the main resonant circuit is filtered by R10 sampling and R12, R11 voltage divider, the sampling voltage is sent to the reference voltage input terminal of precision shunt regulator U1, and because the resonance intensity is strong at this moment, The sampling input voltage is higher than the setting threshold voltage of U1 (for example 2.495V), so the output terminal of U1 forms a low impedance to the reference ground, even if the zener diode Z3 connected in parallel is powered by the pull-up resistor R6, but the voltage at both terminals of Z3 can still be clamped at lower voltage level (for example 2V) by the low impedance clamp of the output terminals of U1, and the two variable output voltage regulation resistors R5 flows current, so R5 and the low impedance output terminals of U1 forms a series connection and then parallels on the lower side sample divider resistor R2 of the two-level variable output voltage circuit, and a higher pulsating sinusoidal voltage is required to turn on Z1 and Q5002, thereby turn off the Q5001 charging circuit, the two-level variable DC voltage regulator circuit realizes the mode of jumping to the high output voltage level (for example 120V). After the high output voltage mode is supplied to the main resonant circuit of the rear stage, the output power of the whole main resonant circuit increases significantly, and the resonant current exceeds the setting threshold value much more, ensuring that the 120V output voltage mode of the two-level variable DC voltage regulator circuit is maintained, in this mode, the fast-charging receiving load receives a higher intensity of magnetic field energy than the low level output voltage mode through resonant coupling, which is converted into high-power electrical energy, and realizes high-power fast charging of its battery after rectifying the filter and the charging control circuit.

The above is only a better embodiment of the present invention, not to make any formal restriction on the present invention, although the present invention is disclosed as above in the best embodiment, but not to limit the present invention, any skilled person familiar with the profession, without departing from the scope of the technical solution of the present invention, when using the above-mentioned revealed technical content to make some changes or modifications to the equivalent embodiment of the change, but where it is not separated from the technical solution of the present invention, according to the present invention technology refers to any simple modification made to the above embodiments, Equivalent changes and modifications are within the scope of the technical scheme of the present invention.

## Claims

1. A wireless charger and receiving load of backward compatibility that automatically identifies fast and slow charging, wherein it comprises a wireless charger and a receiving load, the wireless charger comprises two-level variable DC voltage regulator circuit, a main resonant circuit, a resonant current sampling voltage divider and comparison circuit, the receiving load comprises a receiving resonant circuit, and the two-level variable DC regulator circuit is used for converting the AC input voltage of the power grid into a low-voltage or high-voltage two-level variable stable DC output voltage, the resonant current sampling voltage divider and comparison circuit is used for controlling the output voltage level of the two-level variable DC voltage regulator circuit, and the main resonant circuit adopts a sine wave resonant circuit to convert the DC energy into high-frequency alternating current energy and emits the magnetic field energy through the transmitting coil; the receiving resonant circuit receives the magnetic field energy, charges the rechargeable battery after passing the rectifier filter circuit of the post-stage and the CC/CV charging control circuit, compares the resonant frequency between wireless charger and receiving load, distinguishes different receiving load and realizes charging mode.

2. The wireless charger and receiving load of backward compatibility that automatically identifies fast and slow charging according to claim 1, wherein when the no-load application, the resonant current of the main resonant circuit is very low, and the output voltage of the two-level variable DC voltage regulator circuit is automatically controlled to have a low voltage output after being processed by the resonant current sampling voltage divider and the comparison circuit; The resonant energy intensity of the main resonant circuit is very weak, and the whole wireless charger circuit works in low-power power-saving standby mode.

3. The wireless charger and receiving load of backward compatibility that automatically identifies fast and slow charging according to claim 1, wherein when applied to the slow-charging receiving load, the main resonant circuit of the wireless charger and the resonant circuit of the slow-charging receiving load carry out proportional coupling of ordinary transformer, the resonant current of the main resonant circuit is lower than the setting threshold value, and the output voltage of the two-level variable DC voltage regulator circuit is automatically controlled to be a low voltage level after being processed by the resonant current sampling voltage divider and comparison circuit, a compatible low-power slow charging mode is implemented to the slow-charging receiving load.

4. The wireless charger and receiving load of backward compatibility that automatically identifies fast and slow charging according to claim 1, wherein when applied to the fast-charging receiving load, the main resonant circuit of the wireless charger carries out strong resonance and strong coupling with the resonant circuit of the fast-charging receiving load, the resonant current of the main resonant circuit exceeds the setting threshold value, and the output voltage of the two-level variable DC voltage regulator circuit is automatically controlled to deliver a high voltage level after being processed by the resonant current sampling voltage divider and comparison circuit, realizes the stable normal high-power fast charging mode of the fast-charging receiving load.

5. The wireless charger and receiving load of backward compatibility that automatically identifies fast and slow charging according to claim 1, wherein the two-level variable DC voltage regulator circuit comprises an overcurrent protection component RF5001, a front rectifier device (or component) DB5001 (full-bridge rectifier or half-wave rectifier), a main switching device Q5001 (MOSFET or BJT or other switching device), a rear rectifier diode D1, a main filter capacitor C5001, a feedforward voltage sampling upper voltage divider resistor R1, a feedforward voltage sampling lower side voltage divider resistor R2, reference voltage regulator component Z1, a voltage regulator driving switch Q5002 and a main switching device driving bias resistor R3, the input of described two-level variable DC voltage regulator circuit is connected to the live L and neutral line N terminals of single-phase alternating current mains power supply respectively, live L (or neutral wire N) is connected to one terminal of described overcurrent protection component RF5001, and the another terminal of described overcurrent protection component RF5001 is connected to one terminal of AC input of described front rectifier device (or component) DB5001, the neutral wire N (or the live L) is connected to the another terminal of the AC input of the former rectifier device (or component) DB5001; the DC output positive terminal of described front rectifier device (or component) DB5001 is connected to the current input terminal of described main switching device Q5001, and is connected to one terminal of voltage divider resistor R1 at the upper terminal of described feedforward voltage sampling and one terminal of driving bias resistor R3 of described main switching device simultaneously; the DC output negative terminal network of the former rectifier device (or component) DB5001 is named the reference ground AGND; The current output terminal of described main switching device Q5001 is connected to the anode of described rear rectifier diode D1; the cathode of described rear rectifier diode D1 is connected to the positive terminal of described main filter capacitor C5001; the negative terminal of the main filter capacitor C5001 is connected to the reference ground AGND; the another terminal of the feedforward voltage sampling upper side voltage divider resistor R1 is connected to one terminal of the feedforward voltage sampling lower side voltage divider R2 and the cathode of the reference voltage regulator component Z1 and the current inflow terminal of the shunt resistor R5 of the resonant current sampling voltage divider and comparison circuit; the another terminal of the feedforward voltage sampling lower side voltage divider resistor R2 is connected to the reference ground AGND; The anode of described reference voltage regulator component Z1 is connected to the control terminal of described voltage regulator driving switch Q5002; The current inflow terminal of described voltage regulator driving switch Q5002 is connected to the another terminal of described main switching device driving bias resistor R3 and the control terminal of described main switching device Q5001; The current outflow terminal of described voltage regulator driving switch Q5002 is connected to described reference ground AGND.

6. The wireless charger and receiving load of backward compatibility that automatically identifies fast and slow charging according to claim 5, wherein the main resonant circuit comprises a main resonant inductor T5001-A, a main resonant capacitor C11, a main resonant switch Q5003, an anti-reverse current diode D2, a positive feedback voltage dividing capacitor C5002, a resonant current sampling resistor R10, a upper bias resistor R7 of the main resonant switch and a lower bias resistor R8 of the main resonant switch; one terminal of the main resonant inductor T5001-A is connected to one terminal of the positive terminal of the main filter capacitor C5001 and the positive feedback voltage dividing capacitor C5002 and one terminal of the upper bias resistor R7 of the main resonant switch and one terminal of the current bias resistor R6 of the resonant current sampling divider and comparison circuit; the another terminal of the main resonant inductor T5001-A is connected to the current inflow terminal of the main resonant switch Q5003 and one terminal of the main resonant capacitor C11; The current outflow terminal of described main resonant switch Q5003 is connected to the anode of described anti-reverse current diode D2; the cathode of the anti-reverse current diode D2 is connected to the another terminal of the main resonant capacitor C11 and the another terminal of the positive feedback voltage divider C5002 and one terminal of the resonant current sampling resistor R10 and the one terminal of the current sampling upper terminal of the resonant current sampling voltage divider and the comparison circuit; The control terminal of described main resonant switch Q5003 is connected to the another terminal of upper bias resistor R7 of described main resonant switch and one terminal of lower bias resistor R8 of described main resonant switch; The another terminal of lower bias resistor R8 of described main resonant switch is connected to described reference ground AGND; The another terminal of described resonant current sampling resistor R10 is also connected to described reference ground AGND; There is a magnetic field coupling relationship between the main resonant inductor T5001-A and the receiving resonant inductance Lr_s of the receiving load.

7. The wireless charger and receiving load of backward compatibility that automatically identifies fast and slow charging according to claim 6, wherein the resonant current sampling voltage divider and comparison circuit comprises a current sampling upper side voltage divider resistor R12, a current sampling lower side voltage divider resistor R11, a current sampling lower side filter capacitor C2, a voltage comparing control device U1, a voltage regulator component Z3, a current bias resistor R6, and a shunt resistor R5; One terminal of described current sampling upper side voltage divider resistor R12 is connected with the cathode network of described anti-reverse current diode D2; the another terminal of described current sampling upper side voltage divider resistor R12 is connected to one terminal of described current sampling lower side voltage divider resistor R11 and one terminal of described current sampling lower side filter capacitor C2 and described reference voltage input terminal of voltage comparing control device U1; the another terminal of the voltage divider resistor R11 at the lower terminal of the current sampling and the another terminal of the filter capacitor C2 at the lower terminal of the current sampling and the ground level common terminal of the voltage comparing control device U1 are all connected to the reference ground AGND together; One terminal of described current bias resistor R6 is connected with the positive terminal network of described main filter capacitor C5001; the another terminal of described current bias resistor R6 is connected to the current inflow terminal of described voltage comparing control device U1 and the cathode of described voltage regulator component Z3 and the current outflow terminal of described shunt resistor R5; The anode of the voltage regulator component Z3 is connected to the reference ground AGND.

8. The wireless charger and receiving load of backward compatibility that automatically identifies fast and slow charging according to claim 7, wherein the receiving resonant circuit comprises a resonant inductance Lr_s, a resonant capacitor Cr_s, a rectifier diode D_s, a filter capacitor Cf_s, a charging control switch Qsw_s, a charging current sampling resistor Rcs_s, a rechargeable battery Vbatt, and a CC/CV charging control circuit function block; there is a magnetic field coupling relationship between the resonant inductor Lr_s and the main resonant inductor T5001-A at the transmitting terminal of the wireless charger; the resonant inductance Lr_s and resonant capacitor Cr_s are parallel connection relationship (or series connection relationship); one terminal of the resonant inductance Lr_s and resonant capacitor Cr_s connects to the anode of the rectifier diode D_s; the another terminal of the resonant inductance Lr_s and the resonant capacitance Cr_s is named as the reference ground; the cathode of the rectifier diode D_s is connected to one terminal of the filter capacitor Cf_s and the current inflow terminal of the charge control switch Qsw_s and the voltage sampling terminal of the CC/CV charge control circuit function block; The another terminal of the filter capacitor Cf_s and the ground level common terminal of the CC/CV charging control circuit function block are connected to the reference ground together; The current outflow terminal of the charging control switch Qsw_s is connected to one terminal of the charging current sampling resistor Rcs_s and the current sampling positive terminal of the CC/CV charging control circuit function block; the another terminal of the charging current sampling resistor Rcs_s is connected to the positive terminal of the rechargeable battery Vbatt and the negative terminal of the current sampling of the CC/CV charging control circuit function block; The negative terminal of the rechargeable battery Vbatt at is connected to the reference ground.
